# EUROPÄISCHE PATENTANMELDUNG

(11) **EP 4 734 022 A1**
(43) Veröffentlichungstag der Anmeldung: **29.04.2026**
(21) Anmeldenummer: 25202947.5
(22) Anmeldetag: 18.09.2025
(51) Int. Cl.: G06Q 10/087, G06Q 10/20, B66F 9/075, G01C 21/20, G01M 5/00, G06N 3/00

(54) **TICKETING-SYSTEM FÜR EIN INTRALOGISTISCHES UMFELD MIT FLURFÖRDERZEUGEN**

(30) Priorität: 24.10.2024 DE 102024131005
(71) Anmelder: STILL GmbH, 22113 Hamburg (DE)
(72) Erfinder: Schuethe, Dennis, 21244 Buchholz (DE); Dierfeld, Sven, 20099 Hamburg (DE); Hinckeldeyn, Johannes, 22303 Hamburg (DE)
(74) Vertreter: Patentship Patentanwaltgesellschaft

(57) **Zusammenfassung**

Die Erfindung betrifft eine Datenverarbeitungsvorrichtung (110), beispielsweise einen Server (110), zum Bereitstellen eines Ticketing-Systems, d.h. eines Systems zum Verwalten von Arbeitsaufträgen, in einem intralogistischen Umfeld mit einer Vielzahl von Flurförderzeugen (120a,b) zum Transport von Warenobjekten (140). Die Datenverarbeitungsvorrichtung (110) umfasst eine Kommunikationsschnittelle (113), welche ausgebildet ist, wenigstens ein Bild eines Objekts in dem intralogistischen Umfeld zu empfangen. Ferner umfasst die Datenverarbeitungsvorrichtung (110) eine Prozessoreinrichtung (111), welche ausgebildet ist, auf der Grundlage einer digitalen Karte (111b) des intralogistischen Umfelds und auf der Grundlage des Bildes des Objektes (310) eine Position des Objekts in dem intralogistischen Umfeld zu bestimmen. Die Prozessoreinrichtung (111) der Datenverarbeitungsvorrichtung (110) ist ferner ausgebildet, einen mit dem Objekt verknüpften Arbeitsauftrag, d.h. ein Ticket, mit der Position des Objekts in dem intralogistischen Umfeld zu verknüpfen, beispielsweise indem die Position des Objekts in dem Arbeitsauftrag hinterlegt wird.

## Beschreibung

Die Erfindung betrifft Vorrichtungen und Verfahren zum Betreiben eines Ticketing-Systems für anfallende Arbeitsaufträge in einem intralogistischen Umfeld, beispielsweise einem Warenlager oder einer Lagerhalle, mit Flurförderzeugen zum Transport von Warenobjekten.

In der Intralogistik werden für den Transport und die Lagerung von Produkten, Waren und Materialien oftmals Verpackungen und/oder Ladungsträger, beispielsweise Gitterboxen oder Paletten, insbesondere Europaletten, verwendet. Zur Handhabung derartiger Verpackungen und/oder Ladungsträger in der Intralogistik, d.h. dem innerbetrieblichen Materialfluss, z.B. in einem Warenlager, werden Flurförderzeuge, z.B. Gabelstapler eingesetzt. Derartige Flurförderzeuge können häufig teilautomatisiert oder sogar vollautomatisiert betrieben werden. Moderne Flurförderzeuge sind häufig mit Sensoreinheiten, beispielsweise Kameras ausgestattet, welche ausgebildet sind, die Umgebung eines jeweiligen Flurförderzeugs zu erfassen, so dass auf der Grundlage der erfassten Sensordaten das Flurförderzeug gesteuert werden kann, insbesondere im vollautomatisierten oder teilautomatisierten Betrieb. Ein Warenlager ist in der Regel ein sehr dynamisches Umfeld, in dem die teilautomatisierte oder vollautomatisierte Steuerung der mobilen Flurförderzeuge ein komplexes Problem darstellt.

In einem intralogistischen Umfeld, wie einer intralogistischen Anlage oder einem intralogistischen Gebäude, beispielsweise einer Lagehalle, werden Ticketing-Systeme dazu eingesetzt, um Meldungen, Hinweise und Arbeitsaufträge zu vergeben, zu planen und die Ausführung entsprechend nachzuhalten. Beispiele für solche Arbeitsaufträge können Reparaturen an Lagergeräten oder -technik, Reinigungsaufträge von Fußböden oder Regalen oder die Beseitigung von Hindernissen (z.B. Paletten oder Gabelstapler) an einem bestimmten Ort sein. Ein herkömmliches Ticketing-System umfasst in der Regel ein datenbankbasiertes IT-System, welches einen Workflow zur Bearbeitung eines Arbeitsauftrags, d.h. eines Tickets, zur Verfügung stellt. In einem Ticket werden in der Regel Informationen zu einem Problem oder Arbeitsauftrag gesammelt. Die dabei verwendeten Informationen können vielfältig sein, z.B. Beschreibung des Problems, Datum, Uhrzeit oder verantwortliche Personen. Eine wichtige Information zur Behebung eines Problems ist dabei auch der Ort des aufgetretenen Problems.

Üblicherweise müssen Tickets händisch in ein entsprechendes Ticketing-System eingegeben werden sowie auch die mit dem Ticket, d.h. Arbeitsauftrag, verknüpfte Position, beispielsweise die Position eines beschädigten Regals zum Lagern von Warenobjekten. Es ist ferner bekannt, dem Ticket ein z.B. mit der Kamera eines Smartphones erfassten Bildes eines Objekts hinzuzufügen, auf welchem das Ticket basiert, beispielsweise ein Bild eines beschädigten Regals oder eines verunreinigten Bereichs in einem Warenlager. Auch dies erfolgt jedoch manuell und ist daher zeitaufwändig und ungenau und kann daher oft zu Problemen bei der Behebung führen.

Vor diesem Hintergrund liegt der vorliegenden Erfindung die Aufgabe zu Grunde, verbesserte Vorrichtungen und Verfahren bereitzustellen zum Implementieren eines Ticketing-Systems für anfallende Arbeitsaufträge in einem intralogistischen Umfeld, beispielsweise einem Warenlager oder einer Lagerhalle, mit Flurförderzeugen zum Transportieren von Warenobjekten, beispielsweise Ladungsträgern, Verpackungen, Werkstücken oder Materialien.

Diese Aufgabe wird gemäß einem ersten Aspekt der Erfindung gelöst durch eine nachstehend näher beschriebene Datenverarbeitungsvorrichtung zum Implementieren eines Ticketing-Systems für anfallende Arbeitsaufträge in einem intralogistischen Umfeld, beispielsweise einem Warenlager oder einer Lagerhalle, mit Flurförderzeugen zum Transport von Warenobjekten, beispielsweise Ladungsträgern, Verpackungen, Werkstücken oder Materialien. Bei den Flurförderzeugen zum Transport von Warenobjekten kann es sich beispielsweise um Gabelstapler oder Picker handeln, die manuell, teilautomatisiert und/oder vollautomatisiert betrieben werden können.

Die Datenverarbeitungsvorrichtung gemäß dem ersten Aspekt umfasst eine Kommunikationsschnittelle, welche ausgebildet ist, wenigstens ein Bild eines Objekts in dem intralogistischen Umfeld zu empfangen. Ferner umfasst die Datenverarbeitungsvorrichtung gemäß dem ersten Aspekt eine Prozessoreinrichtung, welche ausgebildet ist, auf der Grundlage einer digitalen Karte des intralogistischen Umfelds und auf der Grundlage des Bildes des Objektes eine Position des Objekts in dem intralogistischen Umfeld zu bestimmen. Die Prozessoreinrichtung der Datenverarbeitungsvorrichtung gemäß dem ersten Aspekt ist ferner ausgebildet, einen mit dem Objekt verknüpften Arbeitsauftrag, d.h. ein Ticket, mit der Position des Objekts in dem intralogistischen Umfeld zu verknüpfen, beispielsweise indem die Position des Objekts zum Ticket hinzugefügt wird.

Gemäß einer Ausführungsform ist die Kommunikationsschnittelle ausgebildet, den mit der Position des Objekts verknüpften Arbeitsauftrag, d.h. das Ticket, an eine Kommunikationsvorrichtung, beispielsweise ein Smartphone oder ein Tablet- oder Laptop-Computer, eines Benutzers zu übertragen.

In einer Ausführungsform ist die Kommunikationsschnittstelle ausgebildet, das Bild des Objekts von einer Kommunikationsvorrichtung eines Benutzers, beispielsweise ein Smartphone oder ein Tablet- oder Laptop-Computer, und/oder von wenigstens einem Flurförderzug der Vielzahl von Flurförderzeugen zu empfangen.

Gemäß einer Ausführungsform ist die Kommunikationsschnittstelle ausgebildet, das Bild des Objekts zusammen mit einer Anfrage nach einem Arbeitsauftrag, d.h. einem Ticket, von der Kommunikationsvorrichtung eines Benutzers und/oder von wenigstens einem Flurförderzug der Vielzahl von Flurförderzeugen zu empfangen, wobei die Prozessoreinrichtung ferner ausgebildet ist, den Arbeitsauftrag, in Reaktion auf die Anfrage nach dem Arbeitsauftrag, zu erzeugen und mit dem Objekt zu verknüpfen.

In einer Ausführungsform ist die Prozessoreinrichtung ferner ausgebildet, auf der Grundlage des Bildes des Objektes einen Ist-Zustand des Objektes zu bestimmen, und, im Fall einer Abweichung des Ist-Zustands des Objekts von einem hinterlegten Soll-Zustand des Objekts, einen Arbeitsauftrag, d.h. ein Ticket, zu erzeugen.

Gemäß einer Ausführungsform ist die Prozessoreinrichtung ferner ausgebildet, im Fall einer Abweichung des Ist-Zustands des Objekts von dem hinterlegten Soll-Zustand des Objekts, den Arbeitsauftrag derart zu erzeugen, dass die Durchführung des Arbeitsauftrags der Abweichung des Ist-Zustands des Objekts von dem hinterlegten Soll-Zustand des Objekts entgegenwirkt.

In einer Ausführungsform ist die Kommunikationsschnittelle ausgebildet, eine Vielzahl von Sensordaten von einer Vielzahl von Sensoreinheiten in dem intralogistischen Umfeld zu empfangen, wobei die Prozessoreinrichtung ausgebildet ist, die digitale Karte des intralogistischen Umfelds auf der Grundlage der Vielzahl von Sensordaten zu generieren.

Gemäß einer Ausführungsform ist die Prozessoreinrichtung ausgebildet, ein künstliches neuronales Netzwerk zu implementieren, wobei das künstliche neuronale Netzwerk ausgebildet ist, auf der Grundlage der digitalen Karte des intralogistischen Umfelds und auf der Grundlage des Bildes des Objektes die Position des Objekts in dem intralogistischen Umfeld zu bestimmen.

Gemäß einem zweiten Aspekt wird die vorstehend genannte Aufgabe gelöst durch ein Verfahren zum Betreiben eines Ticketing-Systems, d.h. eines Systems zum Verwalten von Arbeitsaufträgen, in einem intralogistischen Umfeld mit einer Vielzahl von Flurförderzeugen zum Transport von Warenobjekten. Das Verfahren gemäß dem zweiten Aspekt umfasst die folgenden Schritte:
Empfangen wenigstens eines Bildes eines Objekts in dem intralogistischen Umfeld;
Bestimmen einer Position des Objekts in dem intralogistischen Umfeld auf der Grundlage einer digitalen Karte des intralogistischen Umfelds und auf der Grundlage des Bildes des Objektes; und
Verknüpfen eines mit dem Objekt verknüpften Arbeitsauftrags, d.h. eines Tickets, mit der Position des Objekts in dem intralogistischen Umfeld.

Das Verfahren gemäß dem zweiten Aspekt kann mittels der Datenverarbeitungsvorrichtung gemäß dem ersten Aspekt durchgeführt werden. Daher ergeben sich weitere Ausführungsformen des Verfahrens gemäß dem zweiten Aspekt aus den vorstehend und nachstehend beschriebenen Ausführungsformen der Datenverarbeitungsvorrichtung gemäß dem ersten Aspekt.

Weitere Vorteile und Einzelheiten der Erfindung werden beispielhaft anhand der in den schematischen Figuren dargestellten Ausführungsbeispiele näher erläutert. Hierbei zeigt:
Figur 1 eine schematische Darstellung eines erfindungsgemäßen Systems mit einer Datenverarbeitungsvorrichtung zum Implementieren eines Ticketing-Systems für anfallende Arbeitsaufträge in einem Warenlager mit einer Vielzahl von Flurförderzeugen;
Figur 2 eine schematische Darstellung eines Flurförderzeugs zum Transport von Warenobjekten in einem Warenlager gemäß einer Ausführungsform;
Figur 3 eine schematische Darstellung von Verarbeitungsschritten und Komponenten einer erfindungsgemäßen Datenverarbeitungsvorrichtung zum Implementieren eines Ticketing-Systems für anfallende Arbeitsaufträge in einem Warenlager mit einer Vielzahl von Flurförderzeugen; und
Figur 4 ein Flussdiagramm mit Schritten eines erfindungsgemäßen Verfahrens zum Implementieren eines Ticketing-Systems in einem Warenlager mit einer Vielzahl von Flurförderzeugen.

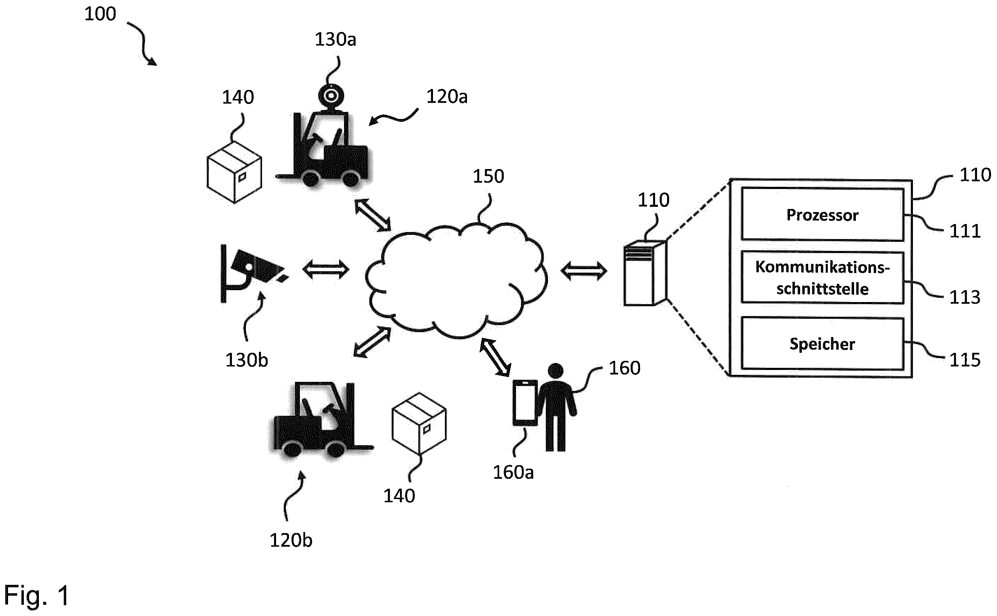

Figur 1 zeigt eine schematische Darstellung eines Systems 100 mit einer erfindungsgemäßen Datenverarbeitungsvorrichtung 110 zum Betreiben eines Ticketing-Systems 111c für anfallende Arbeitsaufträge in einem intralogistischen Umfeld, beispielsweise einem Warenlager oder einer Lagerhalle, mit einer Vielzahl von Flurförderzeugen 120a,b zum Transport von Warenobjekten 140, beispielsweise Ladungsträgern, Verpackungen, Werkstücken oder Materialien. Bei den Flurförderzeugen 120a,b zum Transport von Warenobjekten kann es sich beispielsweise um Gabelstapler oder Picker handeln, die manuell, teilautomatisiert und/oder vollautomatisiert betrieben werden können. Bei der in Figur 1 dargestellten Datenverarbeitungsvorrichtung 110 kann es sich beispielsweise um einen Industrie-PC 110 oder einen Cloud-Server, insbesondere einen Edge-Cloud-Server 110 handeln.

Wie in der Figur 1 dargestellt, umfasst die Datenverarbeitungsvorrichtung 110 einen Prozessor 111, eine Kommunikationsschnittstelle 113 und einen, insbesondere nichtflüchtigen, Speicher 115. Der Speicher 115 kann ausgebildet sein, Daten und ausführbaren Programmcode zu speichern, der, wenn von dem Prozessor 111 der Datenverarbeitungsvorrichtung 110 ausgeführt, den Prozessor 111 veranlasst, die im Folgenden beschriebenen Funktionen, Operationen und Verfahren durchzuführen.

Wie in Figur 1 dargestellt, kann das System 100 ferner eine Vielzahl von Sensoreinheiten 130a,b, welche ausgebildet sind, Sensordaten in dem Warenlager und der Umgebung der Vielzahl von Flurförderzeugen 120a,b zu erfassen und an die Datenverarbeitungsvorrichtung 110 zu übertragen. Die Vielzahl von Sensoren 130a,b können eine Vielzahl von bildgebenden Sensoren, insbesondere Kameras 130a,b umfassen, die in dem industriellen Umfeld, insbesondere dem Warenlager und/oder an der Vielzahl von mobilen Flurförderzeugen 120a angebracht sind. Alternativ oder zusätzlich können die Vielzahl von Sensoren z.B. an den Flurförderzeugen montierten Radar- und/oder Lidar-Sensoren oder auch Mikrofone zur Erfassung von akustischen Daten, beispielsweise Spracheingaben bzw. Sprachsignalen umfassen.

In einer Ausführungsform ist die Kommunikationsschnittstelle 113 der Datenverarbeitungsvorrichtung 110 ausgebildet, drahtlos und/oder drahtgebunden die Vielzahl von Sensordaten von den Sensoren 130a,b zu empfangen und/oder mit den Transportrobotern bzw. mobilen Flurförderzeugen 120a,b und/oder zu kommunizieren. Beispielsweise kann die Kommunikationsschnittstelle 113 der Datenverarbeitungsvorrichtung 110 ausgebildet sein, über ein Kommunikationsnetzwerk, z.B. ein WLAN, 5G-Netzwerk und/oder das Internet 150 die Vielzahl von Sensordaten von den Sensoren 130a,b zu empfangen und/oder mit den Transportrobotern bzw. mobilen Flurförderzeugen 120a,b zu kommunizieren, um Daten auszutauschen.

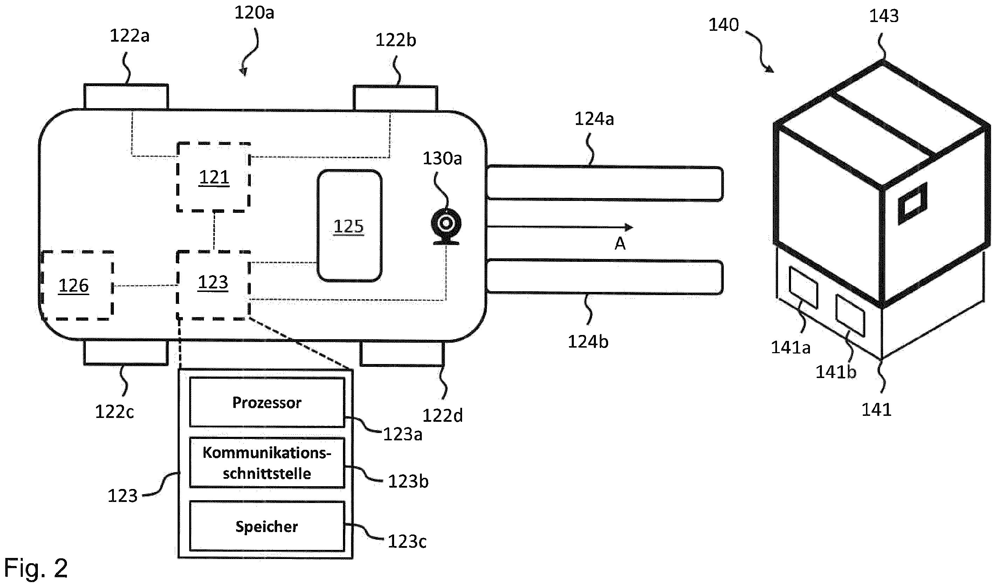

Figur 2 zeigt eine schematische Darstellung eines Flurförderzeugs 120a des Systems 100 gemäß einer Ausführungsform zum Transportieren von Warenobjekten 140 in einem industriellen Umfeld, insbesondere einem Warenlager. Bei dem Flurförderzeug 120a kann es sich insbesondere um einen zeitweise autonom, teil-autonom und/oder manuell betreibbaren, d.h. von einem Bediener geführten Gabelstapler 120a handeln. Bei den Warenobjekten 140 kann es sich beispielsweise um Waren 143, wie Verpackungskartons 143, handeln, welche auf einem jeweiligen Ladungsträger 141 angeordnet sind. Bei dem Ladungsträger 141 kann es sich beispielsweise um eine Palette 141, insbesondere eine Euro-Palette 141, oder eine Gitterbox 141 handeln.

Wie in Figur 2 dargestellt, kann das Flurförderzeug 120a ein Lastaufnahmemittel in Form eines Paares von Lastgabeln 124a,b umfassen, welche ausgebildet sind, in jeweilige Aussparungen, insbesondere Taschen 141a,b an einer Stirnseite des Ladungsträgers 141 eingebracht zu werden, um den Ladungsträger 141 sowie die darauf angeordnete Ware 143 aufzunehmen. Gemäß weiteren Ausführungsformen kann das Lastaufnahmemittel auch als Dorn beispielsweise für die Aufnahme von Folienrollen oder Drahtcoils, als unterhakendes Lastaufnahmemittel (z. B. vergleichbar mit Müllfahrzeugen zur Aufnahme der Mülltonnen), oder als Ballen- und Rollenklammern beispielsweise zur Aufnahme von Papierrollen ausgebildet sein.

Das in Figur 2 dargestellte Flurförderzeug 120a umfasst ferner eine Antriebseinheit 121, beispielsweise wenigstens einen Motor 121, insbesondere einen batteriebetriebenen Elektromotor 121, wobei die Antriebseinheit 121 ausgebildet ist, den Transportroboter 120a in Form eines Flurförderzeugs 120a und das Paar von Lastgabeln 124a,b relativ zu dem Warenobjekt 140 zu bewegen, um beispielsweise die Orientierung und/oder den Abstand zwischen dem Flurförderzeug 120a und der Warenobjekt 140, insbesondere dem Ladungsträger 141 zu ändern und/oder das Paar von Lastgabeln 124a,b anzuheben oder abzusenken. Zu diesem Zweck kann, wie in Figur 2 angedeutet, die Antriebseinheit 121 geeignet mit Rädern 122a-d und/oder dem Paar von Lastgabeln 124a,b des Flurförderzeugs 120a verbunden sein. Das Flurförderzeug 120a kann ferner ein Anzeige- und/oder Bedienfeld 125 zur Anzeige von Informationen und/oder zum Bedienen des Flurförderzeugs 120a umfassen.

Das Flurförderzeug 120a kann ferner eine oder mehrere Sensoreinheiten 130a zur Erfassung von Sensordaten umfassen, welche Informationen über die aktuelle Umgebung des Flurförderzeugs 120a enthalten. In einer Ausführungsform können die Sensoreinheiten 130a, eine Bilderfassungseinheit, insbesondere eine Kamera, einen Radar-Sensor und/oder einen Lidar-Sensor umfassen, welche ausgebildet sind, bei der Bewegung des Flurförderzeugs 120a eine Vielzahl von Bilddaten, Radardaten und/oder Lidardaten der Umgebung des Flurförderzeugs 120a zu erfassen. Ferner kann das Flurförderzeug 120a eine Sensoreinheit 130a in Form eines Mikrofons aufweisen, welches ausgebildet, Spracheingaben zu erfassen.

Wie in Figur 2 angedeutet, kann die Sensoreinheit 130a beispielsweise in Form einer Bilderfassungseinheit 130a vorzugsweise derart an dem Flurförderzeug 120a montiert sein, dass ein Blickfeld 131a der Bilderfassungseinheit 130a im Wesentlichen entlang einer Vorwärtsbewegungsrichtung A des Flurförderzeugs 120a liegt. Vorzugsweise kann die Bilderfassungseinheit 130a in der Symmetrieebene zwischen den zwei Lastgabeln 124a,b montiert sein. Neben der Bilderfassungseinheit 130a mit dem Blickfeld entlang der Vorwärtsbewegungsrichtung A des Flurförderzeugs 120a kann das Flurförderzeug 120a noch weitere Sensoreinheiten umfassen, beispielsweise eine Sensoreinheit mit einem Blickfeld entlang einer Rückwärtsbewegungsrichtung des Flurförderzeugs 120a und/oder eine Sensoreinheit mit einem Blickfeld senkrecht zu der Vorwärtsbewegungsrichtung A des Flurförderzeugs 120a.

Das Flurförderzeug 120a kann ferner eine Steuereinheit 123 umfassen, welche beispielsweise einen oder mehrere Prozessoren oder Mikro-Controller 123a mit geeigneter Software umfassen kann und ausgebildet ist, das Flurförderzeug 120a zumindest teilweise automatisiert zu steuern. Wie in der Figur 2 dargestellt, kann die Steuereinheit 123 ferner eine Kommunikationsschnittstelle 123b sowie einen, insbesondere nichtflüchtigen, Speicher 123c aufweisen. Der Speicher 123c kann ausgebildet sein, Daten und ausführbaren Programmcode zu speichern, der, wenn von dem Prozessor 123a der Steuereinheit 123 ausgeführt, den Prozessor 123a veranlasst, die im Folgenden beschriebenen Funktionen, Operationen und Verfahren durchzuführen.

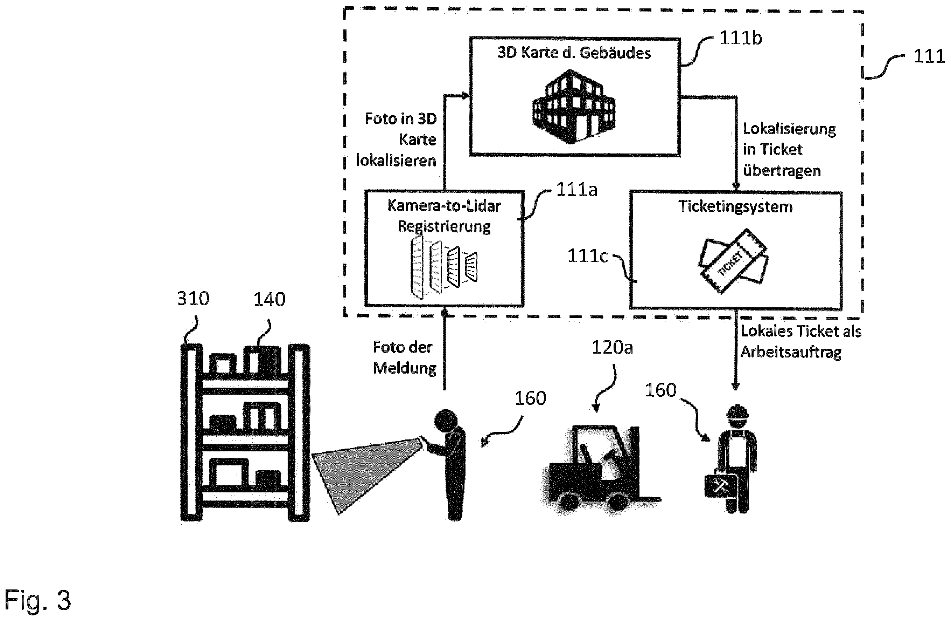

Wie in Figur 1 dargestellt, können sich in dem intralogistischen Umfeld, beispielsweise Warenlager, ferner Personen 160 bewegen, welche über eine Kommunikationsvorrichtung 160a, beispielweise ein Smartphone oder ein Tablet- oder Laptop-Computer 160a, mit der Datenverarbeitungsvorrichtung 110 kommunizieren können, wie dies nachstehend im Detail unter weiterer Bezugnahme auf die Figur 3 beschrieben wird.

Erfindungsgemäß ist die Datenverarbeitungsvorrichtung 110 ausgebildet, wenigstens ein digitales Bild eines Objekts 310 in dem intralogistischen Umfeld, beispielsweise

Warenlager, zu empfangen. Wie in Figur 3 schematisch dargestellt, kann das Objekt 310 beispielsweise ein Regal 310 zu Lagerung von Warenobjekten 140 in dem Warenlager sein, welches beim Ein- und/oder Ausladen von Warenobjekten 140 mit einem der Flurförderzeuge 120a,b beschädigt worden ist. Bei der in Figur 3 dargestellten Ausführungsform kann das Bild des beschädigten Regals 310, beispielsweise mit der Kamera einer Kommunikationsvorrichtung 160a, beispielsweise einem Smartphone 160a, einer Person 160 in dem Warenlager erfasst werden und von der Kommunikationsvorrichtung 160a an die Datenverarbeitungsvorrichtung 110 übermittelt werden.

Auf der Grundlage des empfangenen digitalen Bildes des beschädigten Regals 310 und auf der Grundlage einer digitalen Karte 111b des intralogistischen Umfelds, insbesondere Warenlagers, in dem das beschädigte Regal 310 steht, bestimmt die Prozessoreinrichtung 111 der Datenverarbeitungsvorrichtung 110 eine Position des beschädigten Regals 310 in dem intralogistischen Umfeld, insbesondere Warenlager, beispielsweise eine durch x- und y-Koordinaten definierte Position. Wie dies in Figur 3 schematisch dargestellt ist, ist die Prozessoreinrichtung 111 der Datenverarbeitungsvorrichtung 110 ferner ausgebildet, einen mit dem beschädigten Regal 310 verknüpften Arbeitsauftrag, d.h. ein Ticket, das durch ein Ticketing-System 111c verwaltet wird, mit der Position der im vorherigen Schritt bestimmten Position des beschädigten Regals 310 in dem intralogistischen Umfeld, insbesondere Warenlager, zu verknüpfen, beispielsweise indem die Position des beschädigten Regals 310 dem Ticket hinzugefügt wird, wobei das Ticket die Beschädigung des Regals 310 betrifft, welche zur Erledigung des Tickets behoben werden soll.

Zur Erledigung des Tickets, z.B. zur Behebung der Beschädigung des Regals 310 kann gemäß einer Ausführungsform, wie in Figur 3 schematisch dargestellt, die Datenverarbeitungsvorrichtung 110 über die Kommunikationsschnittelle den mit der Position des beschädigten Regals 310 verknüpften Arbeitsauftrag, d.h. das Ticket, inklusive der hinzugefügten Position des beschädigten Regals 310, an die Kommunikationsvorrichtung 160a eines Benutzers 160 übertragen, um den Benutzer 160 zu veranlassen, die Beschädigung des Regals 310 zu beheben.

Wie bereits vorstehend beschrieben, kann die Datenverarbeitungsvorrichtung 110 über die Kommunikationsschnittstelle 113 das Bild des beschädigten Regals 310 von einer Kommunikationsvorrichtung 160a eines Benutzers 160 und/oder von einem der Flurförderzeuge 120a,b empfangen, wobei das Bild von einem Sensor 130a in Form einer Kamera 130a von dem Flurförderzeug 120a erfasst worden ist. Insbesondere bei der Ausführungsform, bei welcher die Datenverarbeitungsvorrichtung 110 das Bild des beschädigten Regals 310 von der Kommunikationsvorrichtung 160a eines Benutzers 160 empfängt, kann das Bild des beschädigten Regals 310 zusammen mit einer Anfrage nach einem Arbeitsauftrag, d.h. einem Ticket, von der Kommunikationsvorrichtung 160a des Benutzers 160 empfangen werden, so dass die Prozessoreinrichtung 111 der Datenverarbeitungsvorrichtung 110 den Arbeitsauftrag, d.h. das Ticket, in Reaktion auf die Anfrage nach dem Arbeitsauftrag, erzeugt und mit dem beschädigten Regal verknüpft.

Gemäß einer weiteren Ausführungsform der Datenverarbeitungsvorrichtung 110 kann auch die Erzeugung der Tickets automatisiert ablaufen. Hierzu kann in einer Ausführungsform die Prozessoreinrichtung 111 der Datenverarbeitungsvorrichtung 110 ausgebildet sein, auf der Grundlage des erhaltenen Bildes des Regals 310 einen Ist-Zustand des Regals zu bestimmen, beispielsweise Ist-Zustand "beschädigt", und, im Fall einer Abweichung des Ist-Zustands des Regals 310 von einem hinterlegten Soll-Zustand des Regals 310 (z.B. Soll-Zustand "unbeschädigt") einen Arbeitsauftrag, d.h. ein Ticket zu erzeugen. Dabei ist die Prozessoreinrichtung 111 der Datenverarbeitungsvorrichtung 110 ausgebildet, im Fall einer Abweichung des Ist-Zustands von dem hinterlegten Soll-Zustand, den Arbeitsauftrag derart zu erzeugen, dass die Durchführung des Arbeitsauftrags der Abweichung des Ist-Zustands von dem hinterlegten Soll-Zustand entgegenwirkt, d.h. das beschädigte Regal 310 repariert wird, um vom beschädigten Zustand zurück in den unbeschädigten Zustand zu kommen.

Wie bereits vorstehend beschrieben und in Figur 3 dargestellt, ist die Datenverarbeitungsvorrichtung 110 ausgebildet, auf der Grundlage des empfangenen digitalen Bildes des beschädigten Regals 310 und auf der Grundlage einer digitalen Karte 111b des intralogistischen Umfelds, insbesondere Warenlagers, eine Position des beschädigten Regals 310 in dem intralogistischen Umfeld zu bestimmen. Gemäß einer Ausführungsform handelt es sich bei der digitalen Karte 111b des intralogistischen Umfelds, insbesondere Warenlagers, um eine semantische 3D Karte. Dabei kann die digitale Karte 111b in Form einer Punktewolke vorliegen, welche in dem Speicher 115 der Datenverarbeitungsvorrichtung 110 hinterlegt ist und ggf. fortlaufend aktualisiert werden kann. In einer Ausführungsform kann diese Karte 111b der Datenverarbeitungsvorrichtung 110 von einer externen Vorrichtung zur Verfügung gestellt werden. Gemäß einer alternativen Ausführungsform kann die Datenverarbeitungsvorrichtung 110 selbst ausgebildet sein, die digitale Karte 111b des intralogistischen Umfelds auf der Grundlage einer Vielzahl von Sensordaten zu generieren, welche insbesondere von der Vielzahl von Sensoreinheiten 130a,b in dem intralogistischen Umfeld erfasst werden können. Die Erzeugung einer semantischen 3D Karte auf der Grundlage von Lidar-Daten wird beispielsweise in DE 10 2022 105 079 und DE 10 2021 133 614 beschrieben, auf die hiermit vollumfänglich Bezug genommen wird.

Wie bereits vorstehend beschrieben, kann es sich bei den Sensordaten insbesondere um Bilddaten, Radar-Daten, und/oder Lidar-Daten handeln. In einer Ausführungsform kann die Datenverarbeitungsvorrichtung 110 ausgebildet sein, das in Cattaneo, D., Vaghi, M., Ballardini, A. L., Fontana, S., Sorrenti, D. G., & Burgard, W. (2019, October). Cmrnet: Camera to lidar-map registration. In 2019 IEEE intelligent transportation systems conference (ITSC) (pp. 1283-1289). IEEE, beschriebene oder ein ähnliches Verfahren zu implementieren, um auf der Grundlage des empfangenen digitalen Bildes des beschädigten Regals 310 und auf der Grundlage einer digitalen Karte 111b des intralogistischen Umfelds, insbesondere Warenlagers, die Position des beschädigten Regals 310 in dem intralogistischen Umfeld zu bestimmen.

Statt einer 3D Karte kann auch eine kamerabasierte Karte zum Einsatz kommen, wie sie z.B. über NERFs bereitgestellt werden kann. Hier wird einmalig ein initiales neuronales Netz trainiert. Hierzu wird eine Kamera durch das intralogistische Umfeld, insbesondere Warenlager, bewegt, um eine Datenbasis für das Trainieren eines NERF-Netzes zu erhalten. Das Ergebnis ist eine Repräsentation des intralogistischen Umfelds, insbesondere Warenlagers, innerhalb der eine Position vorgeben werden kann, um ein entsprechendes Bild für diese Position zu erhalten, oder umgekehrt.

In einer Ausführungsform ist die Prozessoreinrichtung 111 der Datenverarbeitungsvorrichtung 110 ausgebildet, ein künstliches neuronales Netzwerk 111a zu implementieren, wobei das künstliche neuronale Netzwerk 111a ausgebildet ist, auf der Grundlage der digitalen Karte 111b des intralogistischen Umfelds und auf der Grundlage des Bildes des beschädigten Regals 310 die Position des beschädigten Regals 310 in dem intralogistischen Umfeld zu bestimmen.

Wie der Fachmann erkennt, erlauben hier beschriebene Ausführungsformen die zumindest teilweise automatisierte Identifikation von Abweichungen eines Sollzustandes in einem Lager oder einer Fabrik. Wie bereits vorstehend beschrieben, kann beispielsweise ein Schaden an einem Regal 310 fotografiert und das Foto in der 3D Karte 111b lokalisiert werden. Dadurch ist der Schaden automatisiert lokalisiert und kann einem Ticket in einer Workflow-Datenbank zugeordnet werden. So entfällt die manuelle Arbeit zum Eingeben der Ortsinformationen und die genaue Position des Tickets kann bestimmt werden. Dadurch lassen sich notwendige Arbeiten einfacher wiedererkennen und ausführen. Für den Dienstleister, der den Schaden beseitigen soll, kann zudem eine Karte generiert werden, welche direkt den Ort zeigt. Verbunden mit der Kamera, und der Detektion in der 3D Karte, kann so eine Lokalisierung stattfinden und das Personal zur Stelle navigiert werden. Weitere Anwendungsbeispiele sind das Auffinden von verlorenen Gegenständen, Verschmutzungsberichte oder der Austausch von abgelaufenen Sicherheitseinrichtungen, wie Feuerlöschern.

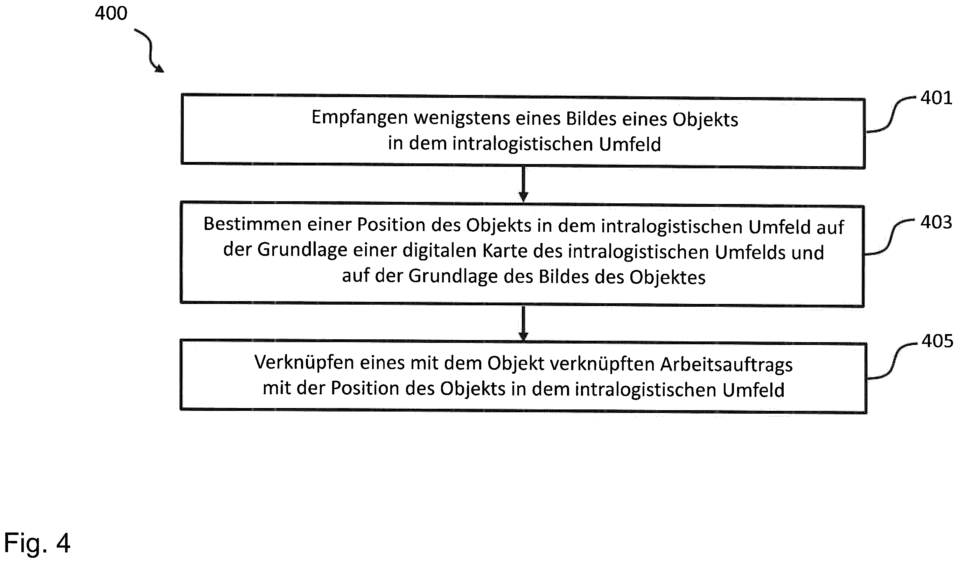

Figur 4 zeigt ein Flussdiagramm mit Schritten eines Verfahrens 400 zum Betreiben eines Ticketing-Systems 111c, d.h. eines Systems zum Verwalten von Arbeitsaufträgen, in einem intralogistischen Umfeld, beispielsweise einem Warenlager, mit einer Vielzahl von Flurförderzeugen 120a,b zum Transport von Warenobjekten 140. Das Verfahren 400 umfasst einen Schritt 401 des Empfangens wenigstens eines Bildes eines Objekts 310 in dem intralogistischen Umfeld. Ferner umfasst das Verfahren 400 einen Schritt 403 des Bestimmens einer Position des Objekts in dem intralogistischen Umfeld auf der Grundlage einer digitalen Karte des intralogistischen Umfelds und auf der Grundlage des Bildes des Objektes. Das Verfahren 400 umfasst ferner einen Schritt 405 des Verknüpfen eines mit dem Objekt 310 verknüpften Arbeitsauftrags, d.h. eines Tickets, mit der Position des Objekts 310 in dem intralogistischen Umfeld.

Das erfindungsgemäße Verfahren 400 kann mittels der erfindungsgemäßen Datenverarbeitungsvorrichtung 110 durchgeführt werden. Daher ergeben sich weitere Ausführungsformen des erfindungsgemäßen Verfahrens 400 aus den vorstehend beschriebenen Ausführungsformen der erfindungsgemäßen Datenverarbeitungsvorrichtung 110.

## Patentansprüche

1. Datenverarbeitungsvorrichtung (110) zum Bereitstellen eines Ticketing-Systems (111c) in einem intralogistischen Umfeld mit einer Vielzahl von Flurförderzeugen (120a,b) zum Transport von Warenobjekten (140), wobei die Datenverarbeitungsvorrichtung (110) umfasst:
eine Kommunikationsschnittelle (113), welche ausgebildet ist, wenigstens ein Bild eines Objekts (310) in dem intralogistischen Umfeld zu empfangen; und
eine Prozessoreinrichtung (111), welche ausgebildet ist, auf der Grundlage einer digitalen Karte (111b) des intralogistischen Umfelds und auf der Grundlage des Bildes des Objektes (310) eine Position des Objekts (310) in dem intralogistischen Umfeld zu bestimmen,
wobei die Prozessoreinrichtung (111) ferner ausgebildet ist, einen mit dem Objekt (310) verknüpften Arbeitsauftrag mit der Position des Objekts (310) in dem intralogistischen Umfeld zu verknüpfen.

2. Datenverarbeitungsvorrichtung (110) nach Anspruch 1, wobei die Kommunikationsschnittelle (113) ausgebildet ist, den mit der Position des Objekts (310) verknüpften Arbeitsauftrag an eine Kommunikationsvorrichtung (160a) eines Benutzers (160) zu übertragen.

3. Datenverarbeitungsvorrichtung (110) nach Anspruch 1 oder 2, wobei die Kommunikationsschnittstelle (113) ausgebildet ist, das Bild des Objekts (310) von einer Kommunikationsvorrichtung (160a) eines Benutzers (160) und/oder von wenigstens einem Flurförderzeug der Vielzahl von Flurförderzeugen (120a,b) zu empfangen.

4. Datenverarbeitungsvorrichtung (110) nach Anspruch 3, wobei die Kommunikationsschnittstelle (113) ausgebildet ist, das Bild des Objekts (310) zusammen mit einer Anfrage nach einem Arbeitsauftrag von der Kommunikationsvorrichtung (160a) eines Benutzers (160) und/oder von wenigstens einem Flurförderzug der Vielzahl von Flurförderzeugen (120a,b) zu empfangen, und wobei die Prozessoreinrichtung (111) ferner ausgebildet ist, den Arbeitsauftrag, in Reaktion auf die Anfrage nach dem Arbeitsauftrag, zu erzeugen und mit dem Objekt (310) zu verknüpfen.

5. Datenverarbeitungsvorrichtung (110) nach Anspruch 3, wobei die Prozessoreinrichtung (111) ferner ausgebildet ist, auf der Grundlage des Bildes des Objektes (310) einen Ist-Zustand des Objektes (310) zu bestimmen, und, im Fall einer Abweichung des Ist-Zustands des Objekts (310) von einem hinterlegten Soll-Zustand des Objekts (310), einen Arbeitsauftrag zu erzeugen.

6. Datenverarbeitungsvorrichtung (110) nach Anspruch 5, wobei die Prozessoreinrichtung (111) ferner ausgebildet ist, im Fall einer Abweichung des Ist-Zustands des Objekts (310) von dem hinterlegten Soll-Zustand des Objekts (310), den Arbeitsauftrag derart zu erzeugen, dass die Durchführung des Arbeitsauftrags der Abweichung des Ist-Zustands des Objekts (310) von dem hinterlegten Soll-Zustand des Objekts (310) entgegenwirkt.

7. Datenverarbeitungsvorrichtung (110) nach einem der vorhergehenden Ansprüche, wobei die Kommunikationsschnittelle (113) ausgebildet ist, eine Vielzahl von Sensordaten von einer Vielzahl von Sensoreinheiten (130a,b) in dem intralogistischen Umfeld zu empfangen, und wobei die Prozessoreinrichtung (111) ausgebildet ist, die digitale Karte (111b) des intralogistischen Umfelds auf der Grundlage der Vielzahl von Sensordaten zu generieren.

8. Datenverarbeitungsvorrichtung (110) nach einer der vorhergehenden Ansprüche, wobei die Prozessoreinrichtung (111) ausgebildet ist, ein künstliches neuronales Netzwerk (111a) zu implementieren, wobei das künstliche neuronale Netzwerk (111a) ausgebildet ist, auf der Grundlage der digitalen Karte (111b) des intralogistischen Umfelds und auf der Grundlage des Bildes des Objektes (310) die Position des Objekts (310) in dem intralogistischen Umfeld zu bestimmen.

9. Verfahren (400) zum Betreiben eines Ticketing-Systems (111c) in einem intralogistischen Umfeld mit einer Vielzahl von Flurförderzeugen (120a,b) zum Transport von Warenobjekten (140), wobei das Verfahren (400) umfasst:
Empfangen (401) wenigstens eines Bildes eines Objekts (310) in dem intralogistischen Umfeld;
Bestimmen (403) einer Position des Objekts (310) in dem intralogistischen Umfeld auf der Grundlage einer digitalen Karte (111b) des intralogistischen Umfelds und auf der Grundlage des Bildes des Objektes (310);
Verknüpfen (405) eines mit dem Objekt (310) verknüpften Arbeitsauftrags mit der Position des Objekts (310) in dem intralogistischen Umfeld.
